# EUROPEAN PATENT APPLICATION

(11) **EP 2 940 978 A1**
(43) Date of publication of application: **04.11.2015**
(21) Application number: 15165832.5
(22) Date of filing: 30.04.2015
(51) Int. Cl.: H04M 3/493, H04L 29/06, H04M 3/56, H04W 4/00

(54) **COMMUNICATION MANAGEMENT SYSTEM, COMMUNICATION MANAGEMENT METHOD, AND CARRIER MEANS**

(30) Priority: 30.04.2014 JP 2014093339
(71) Applicant: Ricoh Company, Ltd., Tokyo 143-8555 (JP)
(72) Inventor: Asai, Takahiro, Tokyo, 143-8555 (JP)
(74) Representative: Schwabe - Sandmair - Marx

(57) **Abstract**

A communication management system (50) receives, from a first communication terminal (10aa), an addition request for adding a second communication terminal (70ab) as a candidate counterpart terminal of the first communication terminal (10aa), obtains information that associates provider identification information for identifying a provider with application identification information for identifying each one of applications that are provided by the provider, and controls not to transmit an addition approval request when first application identification information for identifying an application used by the first communication terminal (10aa) and second application identification information for identifying an application used by the second communication terminal (70ab) are not associated with the same provider identification information.

## Description

### BACKGROUND

### Technical Field

The present invention relates to managing a candidate counterpart terminal in communication between communication terminals.

### Description of the Related Art

In recent years, a plurality of types of communication applications has been installed in smart phones, personal computers (PCs), and the like, to perform communication using various protocols.

In order to make it easier for a user to select a desired counterpart terminal from among candidate counterpart terminals for communication, displaying a candidate list on a start request sender terminal that is the sender of a request for starting communication enables the user to select a desired counterpart terminal (see JP-2006-074453-A).

If a first user on the same communication network (communication platform) registers in the first user's candidate list a communication terminal of a second user without asking the second user for approval, the second user who receives a communication start request from the first user may feel uncomfortable. In view of this, as described in JP-2013-085208-A, before registering a communication terminal of the second user in a candidate list, a management server transmits, to the communication terminal of the second user, an approval request that requests the second user to approve addition of the communication terminal as a candidate counterpart terminal in a candidate list.

At present, however, a plurality of types of communication applications provided by different providers is used on the communication network (communication platform), each of which differs in fee charging systems, services, and so forth.

### SUMMARY

Example embodiments of the present invention include a communication management system that receives, from a first communication terminal, an addition request for adding a second communication terminal as a candidate counterpart terminal of the first communication terminal, obtains information that associates provider identification information for identifying a provider with application identification information for identifying each one of applications that are provided by the provider, and controls not to transmit an addition approval request when first application identification information for identifying an application used by the first communication terminal and second application identification information for identifying an application used by the second communication terminal are not associated with the same provider identification information.

Example embodiments of the present invention include a method of controlling transmission of an addition approval request, which includes: receiving, from a first communication terminal, an addition request for adding a second communication terminal as a candidate counterpart terminal of the first communication terminal; obtaining information that associates application identification information for identifying a provider with application identification information for identifying each one of applications that are provided by the provider; and controlling not to transmit an addition approval request to approve addition of the second communication terminal as a candidate counterpart terminal of the first communication terminal, when first application identification information for identifying an application used by the first communication terminal and second application identification information for identifying an application used by the second communication terminal are not associated with the same provider identification information.

Example embodiments of the present invention include carrier means such as a program that causes one or more processors to perform the above-described method.

According to at least one embodiment of the present invention, in the case where the provider of an application used by a first communication terminal that is an addition request sender and the provider of an application used by a second communication terminal that is an addition request destination are not the same, the communication management system does not transmit an approval request to the second communication terminal. Accordingly, even in the case where fee charging systems, services, and so forth are different for each provider, the occurrence of confusion can be prevented.

### BRIEF DESCRIPTION OF THE SEVERAL VIEWS OF THE DRAWINGS

A more complete appreciation of the disclosure and many of the attendant advantages and features thereof can be readily obtained and understood from the following detailed description with reference to the accompanying drawings, wherein:
Fig. 1 is a schematic diagram of a communication system according to an embodiment of the present invention;
Fig. 2 is an example of an external view of a communication terminal of the communication system of Fig. 1, when implemented by a videoconference system;
Fig. 3 is a hardware configuration diagram of the communication terminal of Fig. 2;
Fig. 4 is a hardware configuration diagram of a communication management system of the communication system of Fig. 1;
Fig. 5 is a hardware configuration diagram of a communication terminal of the communication system of Fig. 1, when implemented by a smart phone;
Fig. 6 is a software configuration diagram of the communication terminal of Fig. 3;
Fig. 7 is a software configuration diagram of the communication terminal of Fig. 5;
Fig. 8 is a functional block diagram of each of the communication terminals of FIG 3 and FIG. 5 and the communication management system;
Fig. 9 is an illustration of a visual information management table;
Fig. 10 is an illustration of an authentication management table;
Fig. 11 is an illustration of a terminal management table;
Fig. 12 is an illustration of a candidate list management table;
Fig. 13 is an illustration of an addition request management table;
Fig. 14 is an illustration of an application use terminal management table;
Fig. 15 is an illustration of an application management table;
Fig. 16 is a sequence diagram illustrating operation of preparing to start communication between communication terminals;
Fig. 17 is an illustration of an addition approval request screen;
Fig. 18 is a sequence diagram illustrating operation of adding a candidate counterpart terminal;
Fig. 19 is a flowchart illustrating operation of determining whether to approve an addition approval request;
Fig. 20 is an illustration of an addition request acceptance screen;
Fig. 21 is a flowchart illustrating operation of processing approval or rejection of an addition approval request;
Fig. 22 is an illustration of an addition approval request screen; and
Fig. 23 is an illustration of an addition completion screen.

The accompanying drawings are intended to depict example embodiments of the present invention and should not be interpreted to limit the scope thereof. The accompanying drawings are not to be considered as drawn to scale unless explicitly noted.

### DETAILED DESCRIPTION

The terminology used herein is for the purpose of describing particular embodiments only and is not intended to be limiting of the present invention. As used herein, the singular forms "a", "an" and "the" are intended to include the plural forms as well, unless the context clearly indicates otherwise. It will be further understood that the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

In describing example embodiments shown in the drawings, specific terminology is employed for the sake of clarity. However, the present disclosure is not intended to be limited to the specific terminology so selected and it is to be understood that each specific element includes all technical equivalents that operate in a similar manner.

In the following description, illustrative embodiments will be described with reference to acts and symbolic representations of operations (e.g., in the form of flowcharts) that maybe implemented as program modules or functional processes including routines, programs, objects, components, data structures, etc., that perform particular tasks or implement particular abstract data types and may be implemented using existing hardware at existing network elements or control nodes. Such existing hardware may include one or more Central Processing Units (CPUs), digital signal processors (DSPs), application-specific-integrated-circuits, field programmable gate arrays (FPGAs) computers or the like. These terms in general may be referred to as processors.

Unless specifically stated otherwise, or as is apparent from the discussion, terms such as "processing" or "computing" or "calculating" or "determining" or "displaying" or the like, refer to the action and processes of a computer system, or similar electronic computing device, that manipulates and transforms data represented as physical, electronic quantities within the computer system's registers and memories into other data similarly represented as physical quantities within the computer system memories or registers or other such information storage, transmission or display devices.

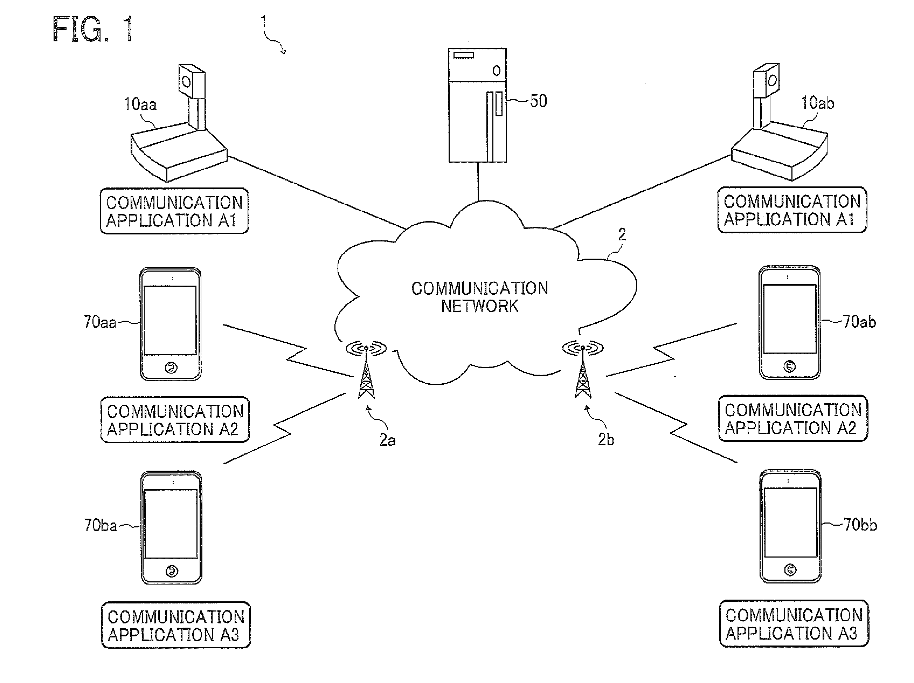

Hereinafter, an embodiment of the present invention will be described using Figs. 1 to 23.

Fig. 1 is a schematic diagram of a communication system 1 according to an embodiment of the present invention. As illustrated in Fig. 1, the communication system 1 includes a plurality of communication terminals (10aa and 10ab) whose examples include videoconference terminals, a communication management system 50 that manages each communication terminal, and a plurality of communication terminals (70aa, 70ab, 70ba, and 70bb) whose examples include smart phones.

Although only two communication terminals (10aa and 10ab) and four communication terminals (70aa, 70ab, 70ba, and 70bb) are illustrated in Fig. 1 to simplify the drawing, the numbers thereof are not limited to these numbers. In addition, an arbitrary one or ones of the plurality of communication terminals (10aa and 10ab) is/are represented as a "communication terminal(s) 10", and an arbitrary one or ones of the plurality of communication terminals (70aa, 70ab, 70ba, and 70bb) is/are represented as a "communication terminal(s) 70". In addition, an arbitrary one or ones of the plurality of communication terminals (70aa and 70ab) is/are represented as a "communication terminal(s) 70a". Further, an arbitrary one or ones of the plurality of communication terminals (70ba and 70bb) is/are represented as a "communication terminal(s) 70b".

The communication management system 50 is one or more computers with a server function. With the communication system 1, the user of a communication terminal 10 and the user of a communication terminal 70 can communicate with each other. This communication can be realized using sound, video (images), text data, and the like. The communication terminals (10 and 70) and the communication management system 50 can communicate with one another via a communication network 2 such as the Internet, a cellular phone network, a local area network (LAN), and/or the like. Further in this embodiment, the communication network 2 includes base stations (2a and2b) on a cellular phone network for performing communication with the communication terminals 70.

Although only two base stations (2a and 2b) are illustrated in Fig. 1 to simplify drawing, the number thereof is not limited to this number. Each communication terminal is an example of a communication terminal, and, as will be described later, a communication terminal may include a car navigation terminal or the like. The communication management system 50 is an example of a communication management system for performing data communication. The communication system 1 is an example of a communication system for performing data communication, which is not limited to conversation-based communication.

Referring to Fig. 1, the same type of "communication application A1" is installed in the communication terminal 10aa and the communication terminal 10ab. Likewise, the same type of "communication application A2" is installed in the communication terminal 70aa and the communication terminal 70ab. Further, the same type of "communication application A3" is installed in the communication terminal 70ba and the communication terminal 70bb. These three types of communication applications (A1, A2, and A3) are provided by different application providers, and different fees are assessed to communication terminals depending on the usage of the applications. The communication applications here include communication applications and messaging applications, and examples thereof include Skype, Google Talk, LINE, FaceTime, Kakao Talk, and Tango (registered or unregistered trademarks), for example, besides videoconference communication applications. In the embodiment, a plurality of types of communication applications each use a common communication platform (the communication network 2 including the communication management system 50), and communication can be performed at least between communication applications of the same type.

### <Hardware Configuration of Communication System>

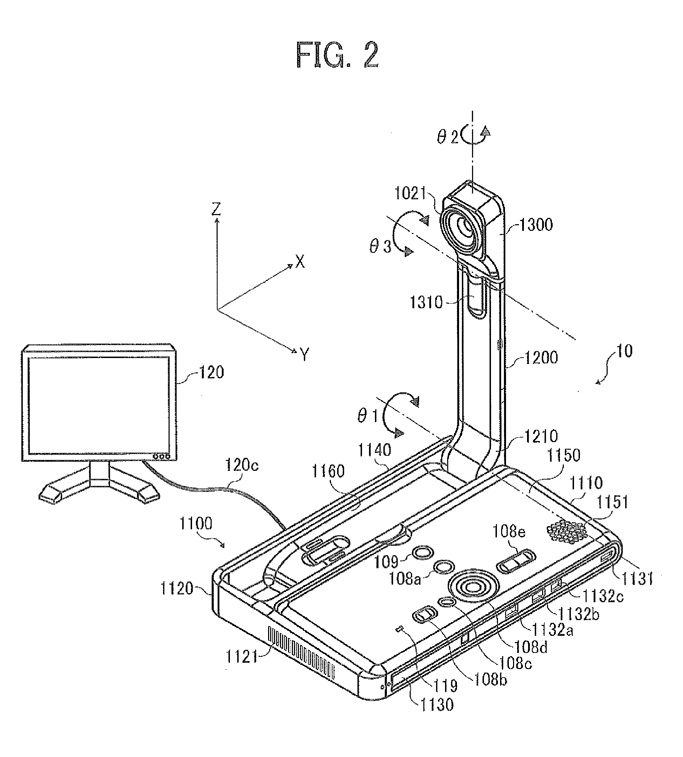

Next, hardware configuration of the communication system 1 will be described. Fig. 2 is an external view of a communication terminal 10 according to the embodiment. As illustrated in Fig. 2, the communication terminal 10 includes a casing 1100, an arm 1200, and a camera housing 1300. Among these portions, a front wall 1110 of the casing 1100 has an inlet face including a plurality of inlet holes, and aback wall 1120 of the casing 1100 has an exhaust face 1121 on which a plurality of exhaust holes are formed. Accordingly, by driving of a cooling fan included in the casing 1100, air behind the communication terminal 10 can be taken in via the inlet face and exhausted to the rear of the communication terminal 10 via the exhaust face 1121. A right-side wall 1130 of the casing 1100 has a sound pickup hole 1131 formed thereon, and a built-in microphone 114, described later, is capable of picking up sound and noise.

An operation panel 1150 is formed toward the right-side wall 1130 of the casing 1100. The operation panel 1150 has a plurality of operation keys (108a to 108e) described later, a power switch 109 described later, and an alarm lamp 119 described later, which are formed thereon. In addition, the operation panel 1150 has a sound output face 1151 formed thereon, which is formed of a plurality of sound output holes for allowing output sound from a built-in a speaker 115 described later to pass through. In addition, an accommodation unit 1160 serving as a recess for accommodating the arm 1200 and the camera housing 1300 is formed toward a left-side wall 1140 of the casing 1100. A plurality of connection ports (1132a to 1132c) for electrically connecting cables to an external device connection interface (I/F) 118 described later are provided on the right-side wall 1130 of the casing 1100. In contrast, a connection port for electrically connecting a cable 120c for a display 120 to the external device connection I/F 118 described later is provided toward the left-side wall 1140 of the casing 1100.

The following description uses the term "operation key(s) 108" for indicating an arbitrary one or ones of the operation keys (108a to 108e), and the term "connection port(s) 1132" for indicating an arbitrary one or ones of the connection ports (1132a to 1132c).

The arm 1200 is attached to the casing 1100 via a torque hinge 1210 and is rotatable in the vertical direction within a range of a tilt angle θ1 of 135 degrees with respect to the casing 1100. Fig. 2 indicates a state in which the tilt angle θ1 is 90 degrees. The camera housing 1300 has a built-in camera 112 provided thereon, which captures an image of a user, a document, a room, or the like. The camera housing 1300 also has a torque hinge 1310 formed thereon. The camera housing 1300 is attached to the arm 1200 via the torque hinge 1310 and is rotatable in the vertical and horizontal directions within a range of a pan angle θ2 of ±180 degrees and a tilt angle 03 of ±45 degrees with respect to the state illustrated in Fig. 2 serving as 0 degrees.

Note that the external view illustrated in Fig. 2 is only exemplary and the appearance is not restricted thereto. The communication terminal 10 may be, for example, a general PC, a smart phone, or a tablet terminal. The camera 112 and the microphone 114 need not necessarily be built-in devices and may be external devices. Since the communication management system 50 has the same appearance as that of a general server computer, a description of the appearance thereof is omitted. Since the communication terminals 70 have the same appearance as that of a general smart phone, a description of the appearance thereof is omitted.

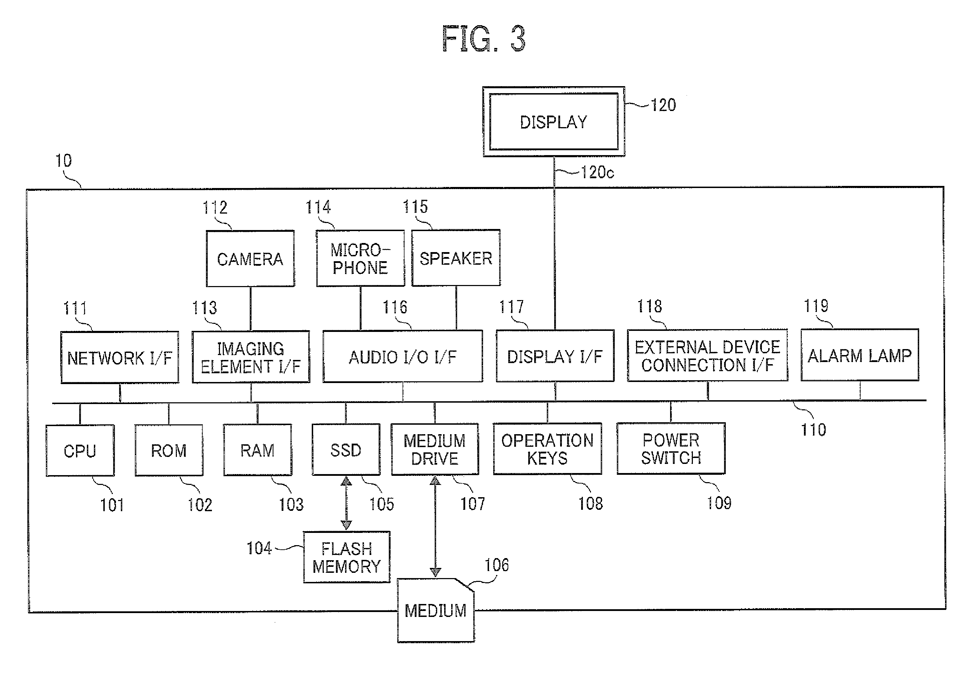

Fig. 3 is a hardware configuration diagram of a communication terminal 10 according to the embodiment. As illustrated in Fig. 3, the communication terminal 10 of the embodiment includes a central processing unit (CPU) 101 that controls entire operation of the communication terminal 10, a read-only memory (ROM) 102 that stores a program used for driving the CPU 101, such as an initial program loader (IPL), a random-access memory (RAM) 103 used as a work area for the CPU 101, a flash memory 104 that stores various types of data, such as a program for the communication terminal 10, image data, and audio data, a solid state drive (SSD) 105 that controls reading/writing of various types of data from/to the flash memory 104 under control of the CPU 101, a medium drive 107 that controls reading/writing (storage) of data from/to a recording medium 106 such as a flash memory, the operation keys 108 operated in the case of, for example, selecting a counterpart terminal of the communication terminal 10, the power switch 109 for turning on/off the power of the communication terminal 10, and a network interface (I/F) 111 for transmitting data using the communication network 2.

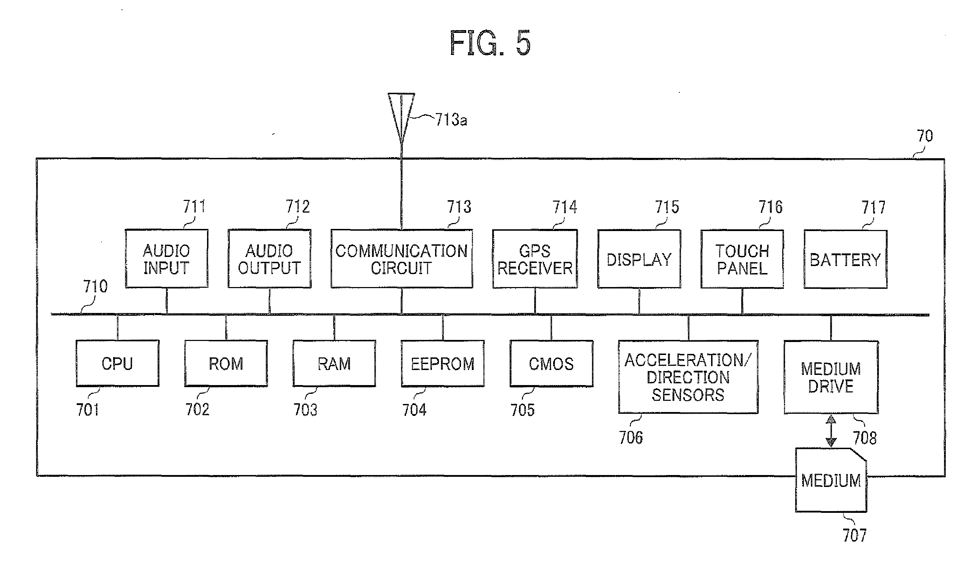

The communication terminal 10 also includes the built-in camera 112, which captures an image of a subject and obtains image data under control of the CPU 101, an imaging element I/F 113 that controls driving of the camera 112, the built-in microphone 114, which receives an audio input, the built-in speaker 115, which outputs audio, an audio input/output I/F 116 that processes inputting/outputting of an audio signal between the microphone 114 and the speaker 115 under control of the CPU 101, a display I/F 117 that transmits image data to an external display 120 under control of the CPU 101, the external device connection I/F 118 for connecting various external devices, the alarm lamp 119, which indicates an abnormality of various functions of the communication terminal 10, and a bus line 110 such as an address bus and a data bus for electrically connecting the above-described elements as illustrated in Fig. 5.

The display 120 may be implemented by any desired display such as a liquid crystal or organic electroluminescence (EL) display that displays an image of a subject, an icon for operation, or the like. In addition, the display 120 is connected to the display I/F 117 by the cable 120c. The cable 120c may be an analog red green blue (RGB) (video graphic array (VGA)) signal cable, a component video cable, a high-definition multimedia interface (HDMI) signal cable, or a digital video interactive (DVI) signal cable.

The camera 112 includes a lens and a solid-state imaging element that converts an image (video) of a subject to electronic data by converting light to electric charge. As the solid-state imaging element, for example, a complementary metal-oxide-semiconductor (CMOS) or a charge-coupled device (CCD) is used.

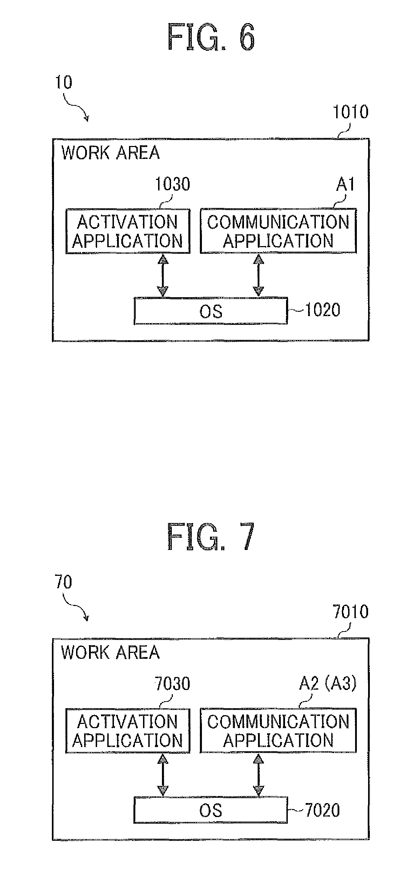

The external device connection I/F 118 is capable of electrically connecting an external device such as an external camera, an external microphone, or an external speaker by using a Universal Serial Bus (USB) cable or the like, which is inserted into the connection port 1132 of the casing 1100 illustrated in Fig. 6. In the case where an external camera is connected, the external camera is driven in preference to the built-in camera 112 under control of the CPU 101. Similarly, in the case where an external microphone is connected or an external speaker is connected, the external microphone or the external speaker is driven in preference to the built-in microphone 114 or the built-in speaker 115 under control of the CPU 101.

Note that the recording medium 106 is removable from the communication terminal 10. In addition, a non-volatile memory that reads or writes data under control of the CPU 101 is not limited to the flash memory 104, and an electrically erasable and programmable read-only memory (EEPROM) may be used instead.

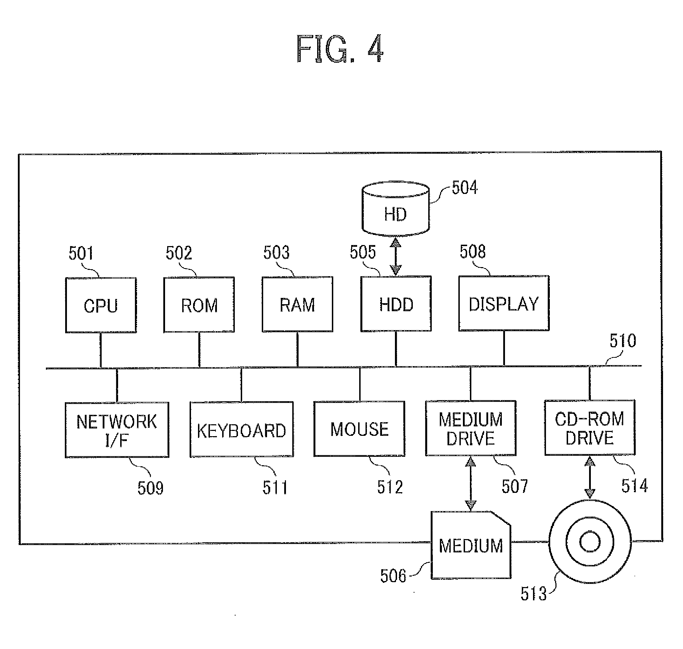

Fig. 4 is a hardware configuration diagram of the communication management system 50 according to the embodiment of the present invention. The communication management system 50 includes a CPU 501 that controls entire operation of the communication management system 50, a ROM 502 that stores a program used for driving the CPU 501, such as an IPL, a RAM 503 used as a work area for the CPU 501, a hard disk (HD) 504 that stores various types of data, such as a program for the communication management system 50, a hard disk drive (HDD) 505 that controls reading/writing of various types of data from/to the HD 504 under control of the CPU 501, a medium drive 507 that controls reading/writing (storage) of data from/to a recording medium 506 such as a flash memory, a display 508 that displays various types of information such as a cursor, a menu, a window, characters, or an image, a network I/F 509 for communicating data using the communication network 2, a keyboard 511 including a plurality of keys for entering characters, numerals, and various instructions, a mouse 512 that selects and executes various instructions, selects a processing target, and moves the cursor, a compact disc read-only memory (CD-ROM) drive 514 that controls reading/writing of various types of data from/to a CD-ROM 513 serving as an example of a removable recording medium, and a bus line 510 such as an address bus and a data bus for electrically connecting the above-described elements as illustrated in Fig. 4.

Fig. 5 is a hardware configuration diagram of a communication terminal 70. As illustrated in Fig. 5, the communication terminal 70 includes a CPU 701 that controls the overall operation of the communication terminal 70, a ROM 702 that stores a basic input/output program, a RAM 703 used as a work area for the CPU 701, an EEPROM 704 that reads/writes data under control of the CPU 701, a CMOS sensor 705 that captures an image of a subject and obtains image data under control of the CPU 701, various acceleration/direction sensors 706 such as an electromagnetic compass that detects geomagnetism, a gyrocompass, and an acceleration sensor, and a medium drive 708 that controls reading /writing (storage) of data from/to a recording medium 707 such as a flash memory. The recording medium 707, from which already-recorded data is read or to which new data is written and stored under control of the medium drive 708, is removable.

Note that the EEPROM 704 stores an operating system (OS) executed by the CPU 701, other programs, and various types of data. The CMOS sensor 705 is a charge-coupled device (CCD) that converts light to electric charge and obtains electronic image data of a subject. As long as an image of a subject can be captured, any desired sensor may be used as the CMOS sensor 705.

Further, the communication terminal 70 includes an audio input 711 that converts audio to an audio signal, an audio output 712 that converts an audio signal to audio, an antenna 713a, a communication circuit 713 that communicates with the nearest base station 2a through a wireless communication signal using the antenna 713a, a global positioning system (GPS) receiver 714 that receives a GPS signal from a GPS satellite, a display 715 such as a liquid crystal display or an organic EL display that displays an image of a subject, various icons, and the like, a touch panel 716 that is mounted on the display 715, includes a pressure-sensitive or electrostatic panel, and detects a position on the display 715 touched with a finger, a touch pen, or the like, and a bus line 710 such as an address bus and a data bus for electrically connecting the above-described elements.

The communication terminal 70 also includes a dedicated battery 717 that drives the communication terminal 70. Note that the audio input 711 is implemented by a microphone to which audio is input, and the audio output 712 is implemented by a speaker that outputs audio.

Fig. 6 is a software configuration diagram of a communication terminal 10. As illustrated in Fig. 6, an OS 1020 and the communication application A1 run on a work area 1010 of the RAM 103. Among them, the OS 1020 is the basic software which provides basic functions and manages the entire communication terminal 10. The communication application A1 is an application for performing communication with another communication terminal. The communication terminal 10 is further installed with an activation application 1030, which activates the communication application A1.

Fig. 7 is a software configuration diagram of a communication terminal 70. As illustrated in Fig. 7, an OS 7020 and the communication application A2 (or A3) run on a work area 7010 of the RAM 703. Among them, the OS 7020 is the basic software which provides basic functions and manages the entire communication terminal 70. The communication applications (A2 and A3) are applications for performing communication with another communication terminal. In the case of the communication terminal 70a, the communication application A2 is installed; and, in the case of the communication terminal 70b, the communication application A3 is installed. The communication terminal 70 is further installed with an activation application 7030, which activates the communication applicationA2 (or A3).

The communication application A1, the communication application A2, and the communication application A3 use different communication protocols and are provided by different application providers. More specifically, the communication applications A1, A2, and A3 are provided by vendors having vendor IDs v01, v02, and v03, respectively.

Note that the communication protocols of the communication applications (A1, A2, and A3) include the following: (1) Session Initiation Protocol (SIP); (2) H.323; (3) SIP-expanded protocol; (4) instant messaging (IM) protocol; (5) protocol using the SIP message method; (6) Internet Relay Chat (IRC) protocol; and (7) protocol expanded from the IM protocol. Among them, (4) IM protocol is a protocol used in, for example, (4-1) Extensible Messaging and Presence Protocol (XMPP) or (4-2) ICQ (registered trademark), AIM (registered trademark), or Skype (registered trademark). In addition, (7) protocol expanded from the IM protocol is Jingle, for example.

### <Functional Configuration of Communication System>

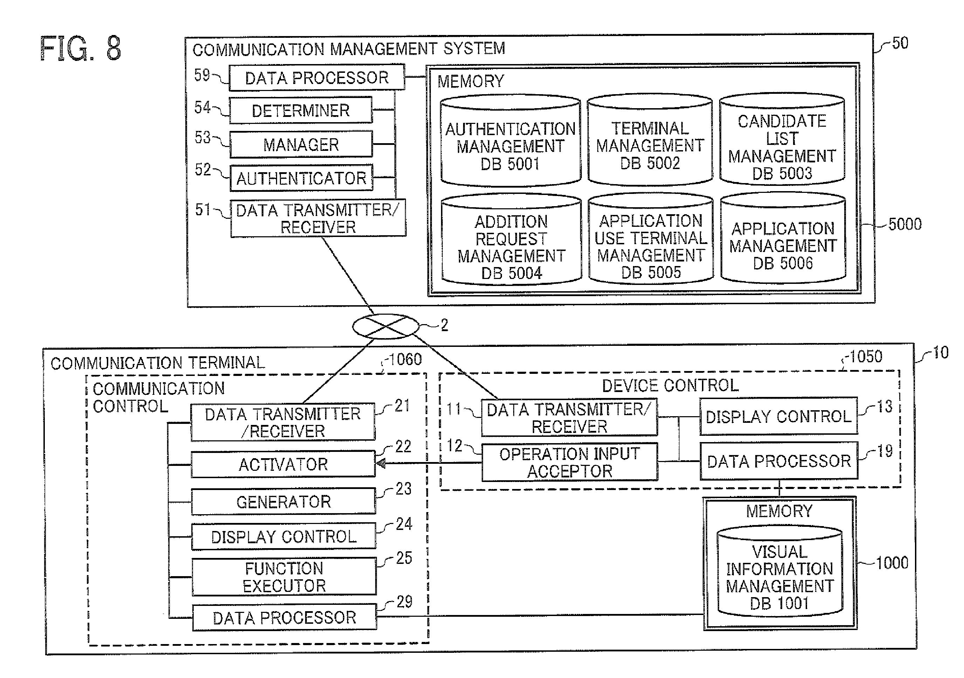

Next, the functional configuration of the embodiment will be described. Fig. 8 is a functional block diagram of a communication terminal 10 and the communication management system 50 that constitute part of the communication system 1 of the embodiment. In Fig. 8, the communication terminal 10 and the communication management system 50 are connected to be capable of communicating data via the communication network 2. Since the functional configuration of the communication terminal 70 is the same within the range illustrated in Fig. 8, a description thereof is omitted.

### <Functional Configuration of Communication Terminal>

The communication terminal 10 includes a device control 1050 and a communication control 1060. The device control 1050 is achieved by activation of the OS 1020 illustrated in Fig. 6. The communication control 1060 is realized by activation of the communication application A1 illustrated in Fig. 6.

The device control 1050 includes a data transmitter/receiver 11, an operation input acceptor 12, a display control 13, and a data processor 19. These units are functions that are realized by operating any of the elements illustrated in Fig. 3 in response to a command from the CPU 101 in accordance with a program expanded from the flash memory 104 to the RAM 103.

The communication control 1060 includes a data transmitter/receiver 21, an activator 22, a generator 23, a display control 24, a function executor 25, and a data processor 29. These units are functions that are realized by operating any of the elements illustrated in Fig. 5 in response to a command from the CPU 101 in accordance with a program expanded from the flash memory 104 to the RAM 103.

The communication terminal 10 also includes a memory 1000 implemented by the ROM 102, the RAM 103, and the flash memory 104, illustrated in Fig. 3. The memory 1000 stores a visual information management database (DB) 1001 including a later-described visual information management table and the like.

### (Visual Information Management Table)

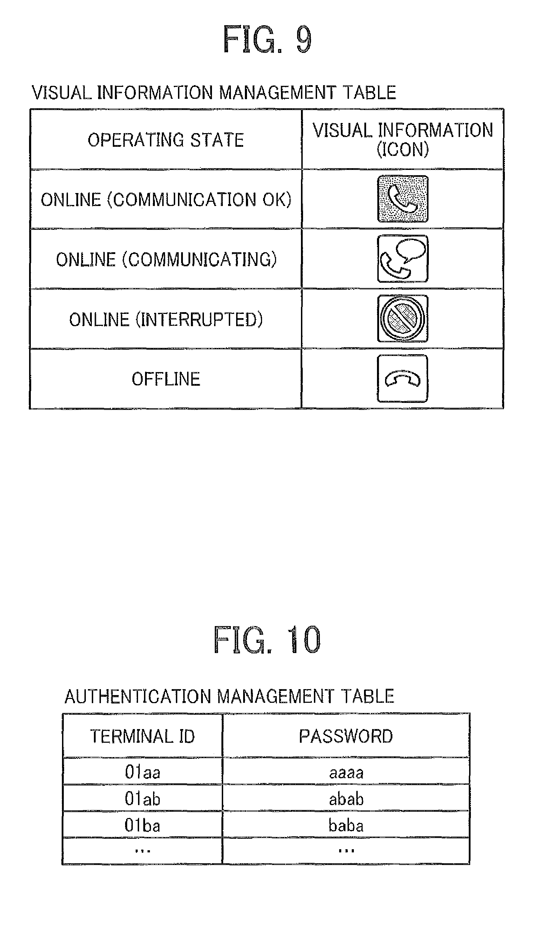

Fig. 9 is an illustration of a visual information management table. In the visual information management table, operating state information that indicates the operating state of a candidate counterpart terminal that can be a counterpart terminal, and data of visual information reflecting the operating state are stored in association with each other. Items of visual information include, for example, various icons whose forms are illustrated as such in Fig. 9. Items of visual information included in the visual information management table maybe sent from the communication management system 50 when a communication terminal serving as the sender of a request for starting communication (hereinafter referred to as a "start request sender terminal") sends a login request in later-described step S2, or may be stored in the memory 1000 prior to shipment of the start request sender terminal. There are four types of operating state information, namely, online (communication OK), online (communicating), online (interrupted), and offline.

### <Functional Configuration of Device Control>

Next, using Fig. 8, functional configuration of the device control 1050 of communication terminal 10 will be described in detail. Note that, in the following description of the functional configuration of the device control 1050 of the communication terminal 10, correspondence to the elements illustrated in Fig. 3 for realizing the functional configuration of the device control 1050 will also be described.

The data transmitter/receiver 11 of the communication terminal 10 illustrated in Fig. 8 is achieved by a command from the CPU 101 illustrated in Fig. 3 and by the network I/F 111 illustrated in Fig. 3, and performs transmission/reception of various types of data (or information) to/from a counterpart terminal, apparatus, or system via the communication network 2.

The operation input acceptor 12 is achieved by a command from the CPU 101 illustrated in Fig. 3 and by the operation keys (108a, 108b, 108c, 108d, and 108e) and the power switch 109 illustrated in Fig. 2, and accepts various inputs or various selections from the user. For example, when the user turns on the power switch 109 illustrated in Fig. 2, the operation input acceptor 12 illustrated in Fig. 8 accepts the power on operation and turns on the power.

The display control 13 is achieved by a command from the CPU 101 illustrated in Fig. 3 and by the display I/F 117 illustrated in Fig. 3, and controls to transmit image data, sent from a counterpart terminal at the time of communication, to the display 120.

The data processor 19 is achieved by a command from the CPU 101 illustrated in Fig. 3 and by the SSD 105 illustrated in Fig. 3, or by a command from the CPU 101, and performs processing to store various types of data in the memory 1000 or to read various types of data stored in the memory 1000.

### <Functional Configuration of Communication Control>

Next, using Figs. 3 and 8, functional configuration of the communication control 1060 of communication terminal 10 will be described in detail. Note that, in the following description of the functional configuration of the communication control 1060 of the communication terminal 10, correspondence to the elements illustrated in Fig. 3 for realizing the functional configuration of the communication control 1060 will also be described.

The data transmitter/receiver 21 illustrated in Fig. 8 is achieved by a command from the CPU 101 illustrated in Fig. 3 and by the network I/F 111 illustrated in Fig. 3, and performs transmission/reception of various types of data (or information) to/from a counterpart terminal, apparatus, or system via the communication network 2.

The activator 22 is achieved by a command from the CPU 101 illustrated in Fig. 3. In the case where the operation input acceptor 12 of the device control 1050 accepts selection of an application by the user, the activator 22 activates the operation of the communication control 1060 (communication application) on the basis of an activation request of the operation input acceptor 12.

The generator 23, which is achieved by a command from the CPU 101 illustrated in Fig. 3, generates a screen of a candidate list by including later-described counterpart terminal state information and the above-described visual information in a later-described candidate list frame (an example of execution image frame data).

The display control 24, which is achieved by a command from the CPU 101 illustrated in Fig. 3 and by the display I/F 117 illustrated in Fig. 3, controls to transmit data of a screen of a candidate list, generated by the generator 23, to the display 120.

The function executor 25, which is achieved by a command from the CPU 101 illustrated in Fig. 3 and by the camera 112, the microphone 114, the speaker 115, or the like illustrated in Fig. 3, controls communication of images, sounds, or the like.

The data processor 29, which is achieved by a command from the CPU 101 illustrated in Fig. 3 and by the SSD 105 illustrated in Fig. 3, or by a command from the CPU 101, performs processing to store various types of data in the memory 1000 or to read various types of data stored in the memory 1000.

### <Functional Configuration of Communication Management System>

The communication management system 50 includes a data transmitter/receiver 51, an authenticator 52, a manager 53, a determiner 54, and a data processor 59. These units are functions that are realized by operating any of the elements illustrated in Fig. 4 in response to a command from the CPU 501 in accordance with a program for the communication management system 50, which is expanded from the HD 204 to the RAM 203. In addition, the communication management system 50 includes a memory 5000 realized by the HD 504 illustrated in Fig. 4. The memory 5000 stores DBs (5001, 5002, 5003, 5004, 5005, and 5006) that are implemented by tables such as those described hereinafter.

### (Terminal Authentication Management Table)

Fig. 10 is an illustration of an authentication management table. The memory 5000 stores the authentication management DB 5001 implemented by an authentication management table such as that illustrated in Fig. 10. In the authentication management table, a password for authentication is stored in association with each of terminal IDs of all communication terminals (10 and 70) managed by the communication management system 50. For example, the authentication management table illustrated in Fig. 10 indicates that the terminal ID of the terminal 10aa is "01aa", and the password of the terminal 10aa is "aaaa".

### (Terminal Management Table)

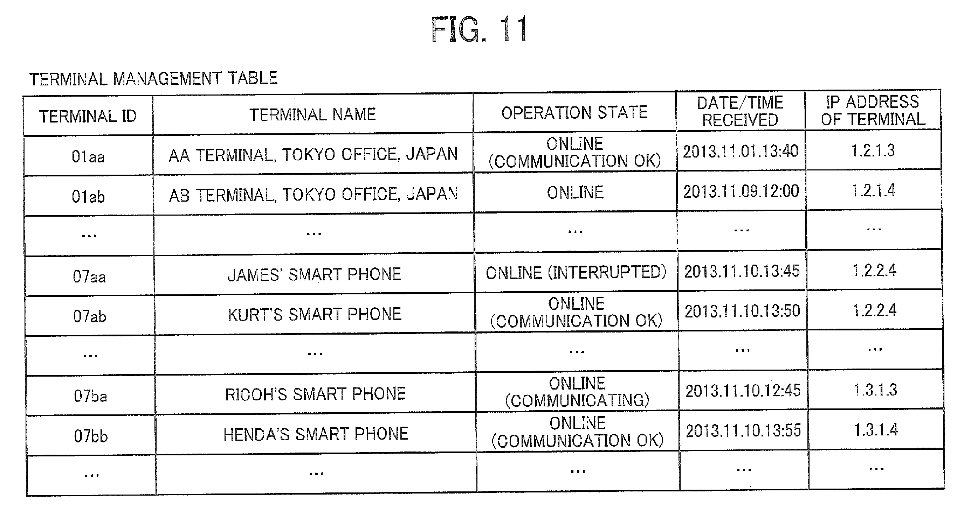

Fig. 11 is an illustration of a terminal management table. The memory 5000 stores the terminal management DB 5002 implemented by a terminal management table such as that illustrated in Fig. 11. In the terminal management table, for the terminal ID of each terminal 10, a terminal name in the case where the terminal 10 serves as a counterpart terminal, the operating state of the terminal 10, a date/time received at which login request information described later is received by the communication management system 50, and the IP address of the terminal 10 are stored in association with one another. For example, the terminal management table illustrated in Fig. 11 indicates that the communication terminal 10aa with the terminal ID "01 aa" has the terminal name "AA terminal, Tokyo office, Japan", the operating state "online (communication OK)", the date/time received at which login request information is received by the communication management system 50 being "November 1, 2013, 13:40", and the IP address "1.2.1.3". With the terminal ID, the terminal type, and the terminal name of each terminal 10 that are stored, the communication management system 50 allows the terminal 10 to perform communication.

### (Candidate List Management Table)

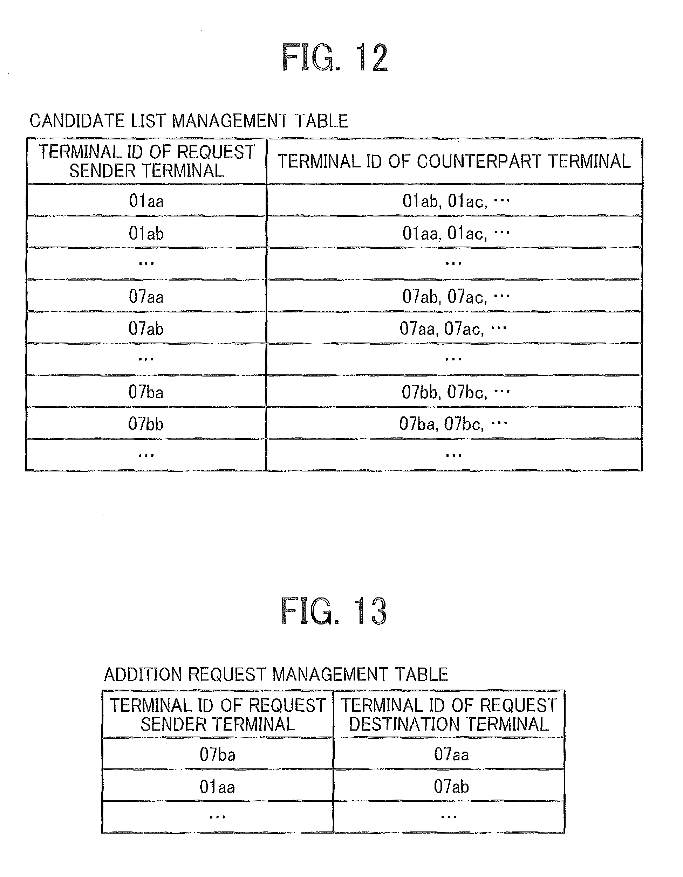

Fig. 12 is an illustration of a candidate list management table. The memory 5000 stores the candidate list management DB 5003 implemented by a candidate list management table such as that illustrated in Fig. 12. In the candidate list management table, the terminal IDs of all counterpart terminals registered as candidate counterpart terminals that can be counterpart terminals are stored in association with the terminal ID of a start request sender terminal that sends a request to start communication. For example, the candidate list management table illustrated in Fig. 12 indicates that candidates for a counterpart terminal to which a start request sender terminal (terminal 10aa) whose terminal ID is "01aa" can send a request to start communication are the communication terminal 10ab whose terminal ID is "01ab", the communication terminal 10ac whose terminal ID is "01ac", and so forth. The candidate counterpart terminals are updated by addition or deletion in the communication management system 50.

### (Addition Request Management Table)

Fig. 13 is an illustration of an addition request management table. The memory 5000 stores the addition request management DB 5004 implemented by an addition request management table such as that illustrated in Fig. 13. In the addition request management table, the terminal ID of a communication terminal serving as the sender of a request for adding a candidate counterpart terminal (hereinafter represented as an "addition request sender terminal"), and the terminal ID of a communication terminal serving as a request destination that has been requested to be added as a candidate counterpart terminal (hereinafter represented as an "addition request destination terminal") are managed in association with each other. Accordingly, it becomes possible to manage from which communication terminal to which communication terminal a request for adding a candidate counterpart terminal has been sent.

### (Application Use Terminal Management Table)

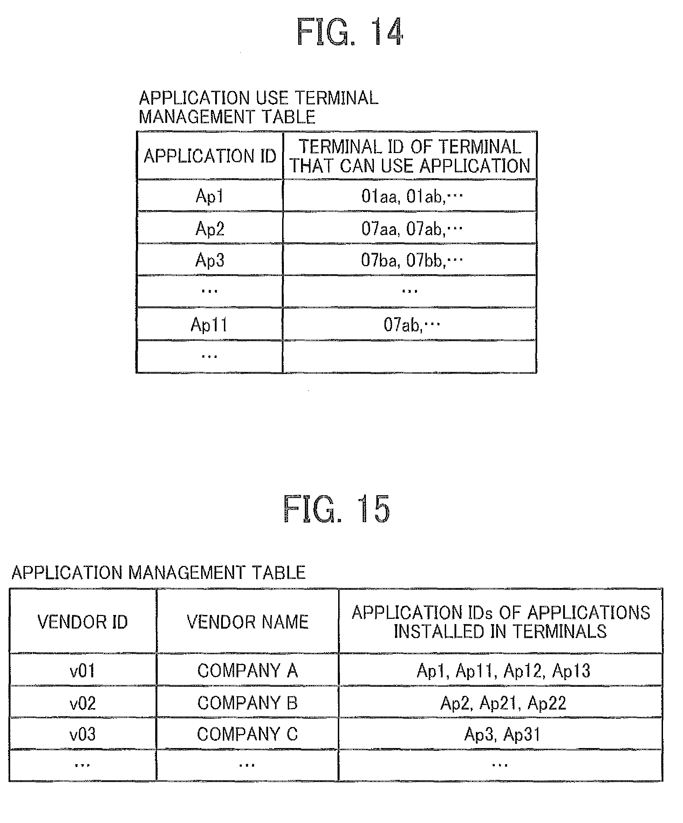

Fig. 14 is an illustration of an application use terminal management table. The memory 5000 stores the application use terminal management DB 5005 implemented by an application use terminal management table such as that illustrated in Fig. 14. In the application use terminal management table, an application ID for identifying an application, and a terminal ID for identifying a communication terminal (10 or 70) that can use the application are stored in association with each other. For example, the application use terminal management table illustrated in Fig. 14 indicates that, for the communication application A1 whose application ID is "Ap1", the terminal IDs of communication terminals that can use the communication application A1 are "01aa, 01ab, ...".

### (Application Management Table)

Fig. 15 is an illustration of an application management table. The memory 5000 stores the application management DB 5006 implemented by an application management table such as that illustrated in Fig. 15. The application management table stores, for one or more applications that can be used by the terminals (10 or 70) of the system 1, a vendor ID (an example of provider identification information) for identifying a vendor that provides the application, a vendor name that is the name of the vendor, and an application ID for identifying the application in association with one another. For example, the application management table illustrated in Fig. 15 indicates that, for the vendor ID "v01" having the vendor name "Company A", applications having application IDs "Ap1, Ap11, Ap12, and Ap13" are installed in one or more communication terminals. For example, upon reception of a request for adding a candidate counterpart terminal from an addition request sender terminal in which the application A1 provided by the vendor V1 having the vendor ID "v01" is installed, the communication management system 50 transmits an addition approval request to an addition request destination terminal in which any of the applications (A1, A11, A12, and A13) provided by the same vendor V1 having the vendor ID "v01" is installed. However, the communication management system 50 does not transmit an addition approval request to an addition request destination terminal in which an application A21 or the like provided by a vendor V2 or the vendor V3, other than the same vendor V1 whose vendor ID is "v01", is installed.

Next, functional configuration of the communication management system 50 will be described in detail. Note that, in the following description of the functional configuration of the communication management system 50, correspondence to elements illustrated in Fig. 4 for realizing the functional configuration of the communication management system 50 will also be described.

The data transmitter/receiver 51, which is achieved by a command from the CPU 501 illustrated in Fig. 4 and by the network I/F 509 illustrated in Fig. 4, performs transmission/reception of various types of data (or information) to/from another communication terminal, apparatus, or system via the communication network 2.

The authenticator 52, which is achieved by a command from the CPU 501 illustrated in Fig. 4, authenticates a terminal by searching the authentication management table (see Fig. 10) with a terminal ID and a password received by the data transmitter/receiver 51 as search keys and determining whether the same pair of terminal ID and password is managed in the authentication management table.

The manager 53, which is achieved by a command from the CPU 501 illustrated in Fig. 4, stores, in the terminal management table (see Fig. 11), for each terminal ID and terminal name of a communication terminal (10 or 70), the operating state of the communication terminal (10 or 70), the date/time received at which the communication management system 50 has received a login request, and the IP address of the communication terminal (10 or 70) in association with one another.

The determiner 54, which may be achieved by a command from the CPU 501, determines whether application identification information for identifying an application used by an addition request sender terminal, read by the data processor 59, and application identification information for identifying an application used by an addition request destination terminal are associated with the same provider identification information in the application management table (see Fig. 15).

The data processor 59, which is achieved by a command from the CPU 501 illustrated in Fig. 4 and by the HDD 505 illustrated in Fig. 4, or by a command from the CPU 501, processes to store various types of data in the memory 5000 or to extract various types of data stored in the memory 5000.

### <Example Operation>

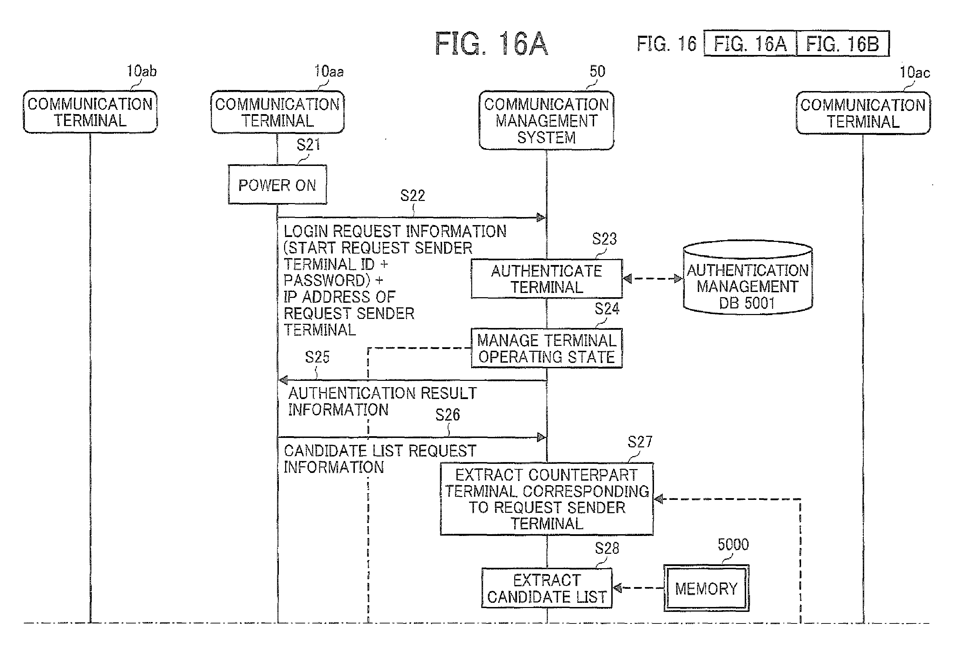

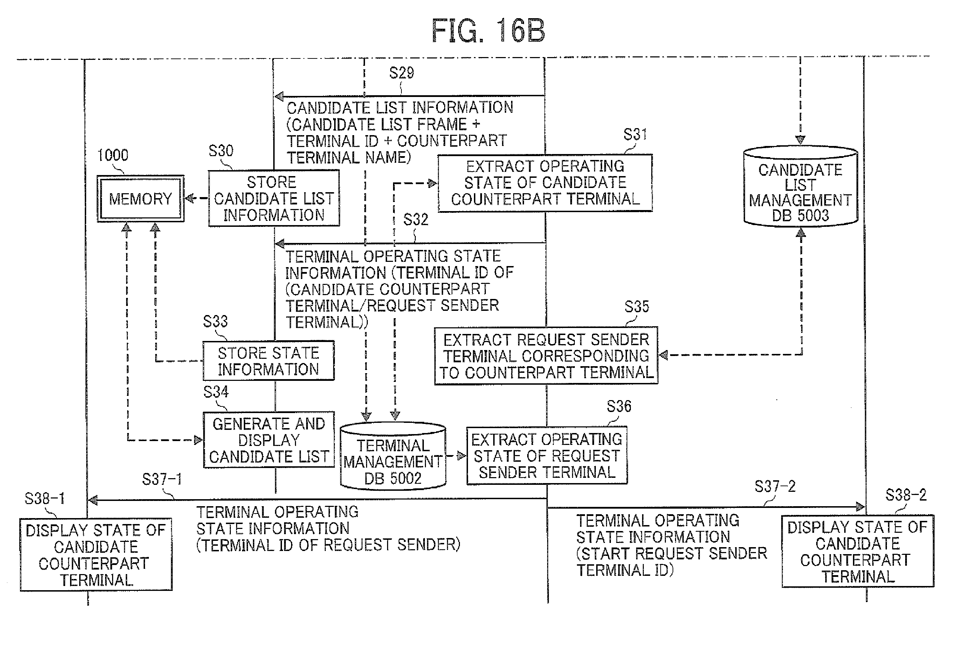

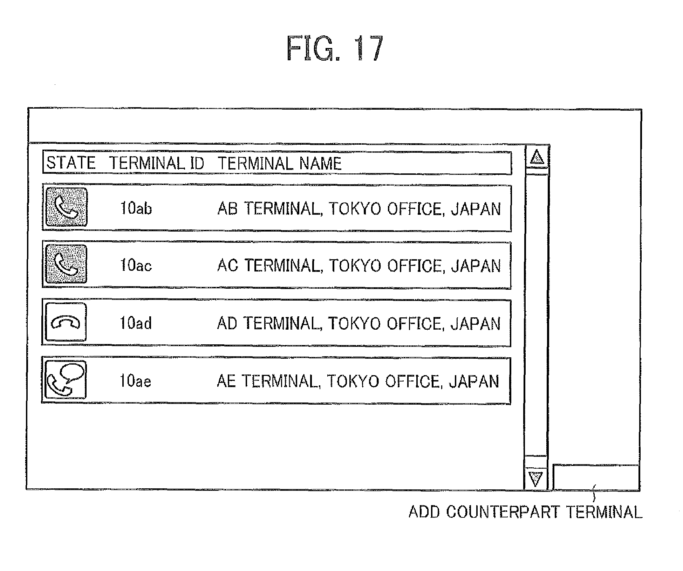

Next, using Figs. 16 to 23, operation of the embodiment will be described. At first, operation of transmitting/receiving each item of management information at a preparation step before the communication terminal 10aa serving as the sender of a request for starting communication starts communication will be described using Figs. 16 and 17. Fig. 16 is a sequence diagram illustrating operation for preparing to start communication between communication terminals. Fig. 17 is an illustration of an addition approval request screen. Note that Fig. 16 illustrates operation of transmitting/receiving various items of management information entirely by a management information session sei. Hereinafter, operation after completion of authentication by the device control 1050 of the communication terminal 10aa as a device will be described.

First, when the user operates the operation keys (108a to 108e) illustrated in Fig. 2, the operation input acceptor 12 of the start request sender terminal (communication terminal 10aa) gives an activation command to the activator 22 of the communication control 1060, which leads to activation of the communication control 1060 (step S21).

Next, the data transmitter/receiver 21 of the communication control 1060 transmits login request information that indicates a login request to the communication management system 50 via the communication network 2 (step S22). The login request information includes a terminal ID for identifying the communication terminal 10aa, which is a local terminal, and a password. The terminal ID and the password are data that have been read via the data processor 19 from the memory 1000 and sent to the data transmitter/receiver 11. Note that the terminal ID and the password may be data read from an external recording medium via the data processor 19, or may be data input by a user to a communication terminal (10 or 70). In the case of transmitting login request information from the communication terminal 10aa to the communication management system 50, the communication management system 50, which is a receiving side, can receive the IP address of the communication terminal 10aa, which is a transmitting side.

Next, the authenticator 52 of the communication management system 50 searches the authentication management DB 5001 (see Fig. 10) of the memory 5000 using the terminal ID and the password included in the login request information received via the data transmitter/receiver 51 as search keys, and determines whether the same terminal ID and the same password are stored in the authentication management DB 5001 (step S23) to authenticate. In the case where the authenticator 52 determines that the login request is a login request received from a communication terminal 10 that has a legitimate use authority since the same terminal ID and the same password are managed, the manager 53 stores, in the terminal management DB 5002 (see Fig. 11), the operating state, the date/time received at which the above-described login request information is received, and the IP address of the communication terminal 10aa for each record indicated by the terminal ID and the terminal name of the communication terminal 10aa (step S24). Accordingly, the operating state "online (communication OK)", the date/time received "November 1, 2013, 13:40", and the IP address "1.2.1.3" are stored in association with the terminal ID "01aa" in the terminal management table.

The data transmitter/receiver 51 of the communication management system 50 transmits authentication result information indicating an authentication result obtained by the authenticator 52 to the start request sender terminal (communication terminal 10aa) which has sent the above-mentioned login request, via the communication network 2 (step S25). In the embodiment, the case in which it has been determined by the authenticator 52 that the communication terminal 10aa is a communication terminal that has a legitimate use authority will be described as follows.

Upon reception, by the data transmitter/receiver 21 of the request sender terminal (communication terminal 10aa), of the authentication result information indicating that the request sender terminal is a communication terminal that has a legitimate use authority, the data transmitter/receiver 21 transmits candidate list request information indicating a request for a candidate list to the communication management system 50 via the communication network 2 (step S26). Accordingly, the data transmitter/receiver 51 of the communication management system 50 receives the candidate list request information.

Next, the data processor 59 searches the candidate list management DB 5003 (see Fig. 12) by using the terminal ID "01aa" of the request sender terminal (communication terminal 10aa) which has sent the login request as a search key, reads the terminal ID of a candidate counterpart terminal that can communicate with the request sender terminal (terminal 10aa), and reads a terminal name corresponding to this terminal ID from the terminal management DB 5002 (see Fig. 11) (step S27). Here, the terminal IDs ("01ab", "01ac",...) of candidate counterpart terminals (10ab, 10ac,...) corresponding to the terminal ID "01aa" of the request sender terminal (communication terminal 10aa), and terminal names ("AB terminal, Tokyo office, Japan", "AC terminal,...",...) corresponding thereto are extracted.

Next, the data transmitter/receiver 51 of the communication management system 50 reads data of a candidate list frame from the memory 5000 via the data processor 59 (step S28), and transmits, to the start request sender terminal (communication terminal 10aa), "candidate list information (candidate list frame, terminal IDs, and terminal names)" including this candidate list frame, and the terminal IDs and terminal names read by the data processor 59 (step S29). Accordingly, in the start request sender terminal (communication terminal 10aa), the data transmitter/receiver 21 receives the candidate list information, and the data processor 29 stores the candidate list information in the memory 1000 (step S30).

In this manner, in the embodiment, instead of managing candidate list information by each communication terminal 10, the communication management system 50 centrally manages candidate list information of all communication terminals 10. Therefore, even in the case where a new communication terminal 10 is included in the transmission system 1, a new model communication terminal 10 is included in place of an already-included communication terminal 10, or the appearance of the candidate list frame is to be changed, the communication management system 50 centrally handles these cases, and hence, the burden of each communication terminal 10 changing candidate list information can be removed.

In addition, the data processor 59 of the communication management system 50 searches the terminal management DB 5002 (see Fig. 11) by using the above-mentioned read terminal IDs ("01ab", "01ac",...) of candidate counterpart terminals as search keys, and reads a corresponding operating state for each of the above-mentioned terminal ID, thereby obtaining the operating state of each of the communication terminals (10ab, 10ac, ...) serving as candidate counterpart terminals (step S31).

Next, the data transmitter/receiver 51 transmits "terminal operating state information" including each terminal ID serving as a search key used in step S27 described above and the operating state of a corresponding counterpart terminal to the start request sender terminal (communication terminal 10aa) via the communication network 2 (step S32).

Next, the data processor 29 of the start request sender terminal (communication terminal 10aa) sequentially stores the terminal state information, received from the communication management system 50, in the memory 1000 (step S33). Thus, by receiving the above-described state information of each communication terminal, the start request sender terminal (communication terminal 10aa) can obtain the current operating state of the communication terminal 10 serving as a candidate counterpart terminal that can communicate with the start request sender terminal (communication terminals 10aa, 10ac,...).

Next, the generator 23 of the start request sender terminal (communication terminal 10aa) generates a candidate list in which the state of a communication terminal 10 serving as a candidate counterpart terminal is reflected, on the basis of the candidate list information and the terminal state information stored in the memory 1000, and controls the timing at which the display control 24 displays the candidate list on the display 120 illustrated in Fig. 5 (step S34). Note that, in the candidate list illustrated in Fig. 17, icons reflecting the operating states of the communication terminals 10 that are candidate counterpart terminals (10ab, 10ac, 10ad, 10ae) are, from the top: "online (communication OK)", "online (communication OK)", "offline", and "online (communicating)".

In contrast, the data processor 59 of the communication management system 50 searches the candidate list management DB 5003 (see Fig. 12) on the basis of the terminal ID "01aa" of the start request sender terminal (terminal 10aa) which has sent the login request, thereby extracting the terminal ID of another start request sender terminal that registers the terminal ID "01aa" of the above-mentioned start request sender terminal (communication terminal 10aa) as a candidate counterpart terminal (step S35). In the candidate list management table illustrated in Fig. 12, the terminal IDs of other start request sender terminals to be read are "01ab", "01ac", and so forth. Although not illustrated in Fig. 12, it is assumed that the terminal ID "01aa" is stored in association with the terminal ID "01ac" to indicate that the terminal 10aa is a candidate counterpart terminal for the terminal 10ac.

Next, the data processor 59 of the communication management system 50 searches the terminal management DB 5002 (see Fig. 11) on the basis of the terminal ID "01aa" of the start request sender terminal (communication terminal 10aa) which has sent the login request, and obtains the operating state of the start request sender terminal (communication terminal 10aa) which has sent the login request (step S36).

The data transmitter/receiver 51 transmits "terminal state information" including the terminal ID "01aa" and the operating state "online" of the start request sender terminal (communication terminal 10aa), obtained in step S36 described above, to communication terminals (10ab, 10ca, ...) whose operating states are "online" in the terminal management DB 5002 (see Fig. 11), among the communication terminals (10ab, 10ca, ...) according to the terminal IDs ("01ab", "01ca", ...) extracted in step S35 described above (step S37-1, S37-2). When transmitting the terminal state information to the communication terminals (10ba, ...), the data transmitter/receiver 51 refers to the IP addresses of the communication terminals, which are managed in the terminal management table illustrated in Fig. 11, on the basis of the terminal IDs ("01ba", ...). Accordingly, the terminal ID "01aa" and the operating state "online" of the request sender terminal (communication terminal 10aa) which has sent the login request can be transmitted to other counterpart terminals (10ba, 10ca, ...) that can communicate with the request sender terminal (communication terminal 10aa), which has sent the login request, as a candidate counterpart terminal. Accordingly, the state of each candidate counterpart terminal, such as that illustrated in Fig. 17, can be displayed also on the candidate counterpart terminal (communication terminals 10ab, 10ac) (step S38-1, S38-2). Note that only the communication terminals 10aa, 10ab, and 10ac are illustrated in Fig. 16 for simplicity. Since other communication terminals 10 also perform operation that is the same as or similar to the operation in any one of steps S21 to S38 described above, descriptions thereof are omitted.

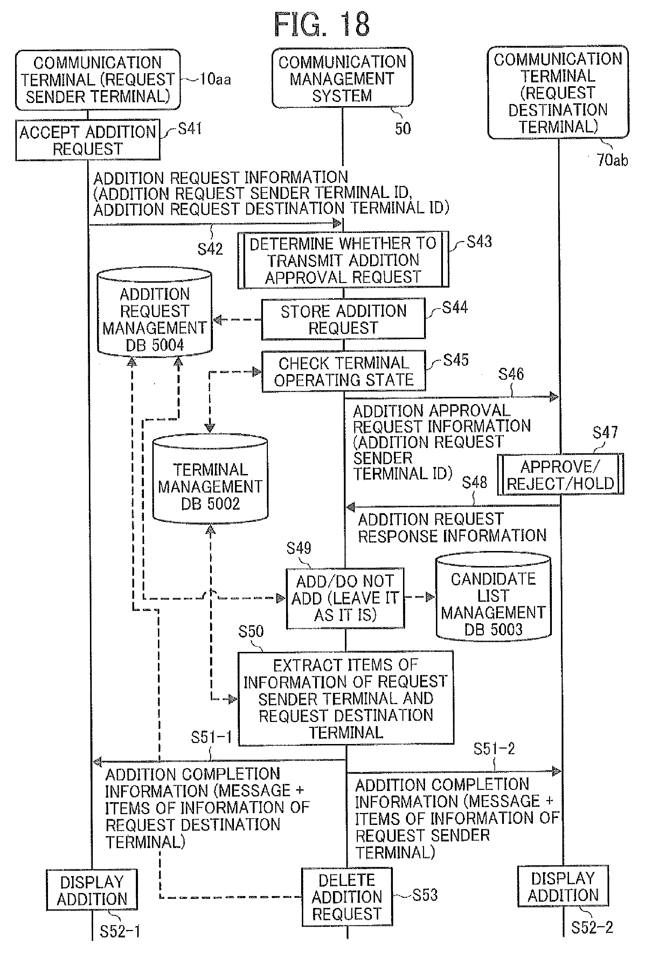

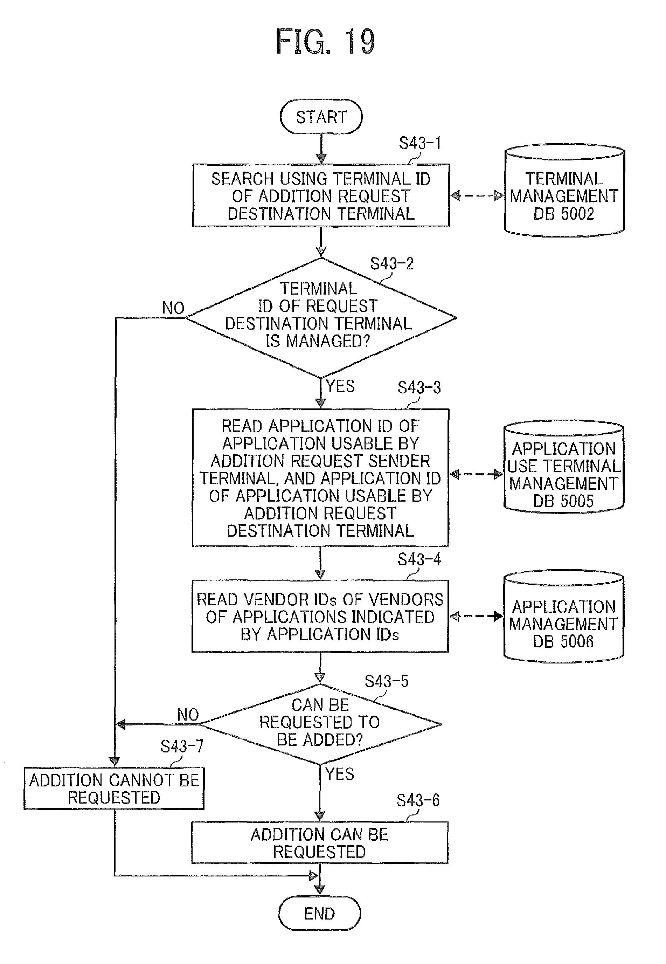

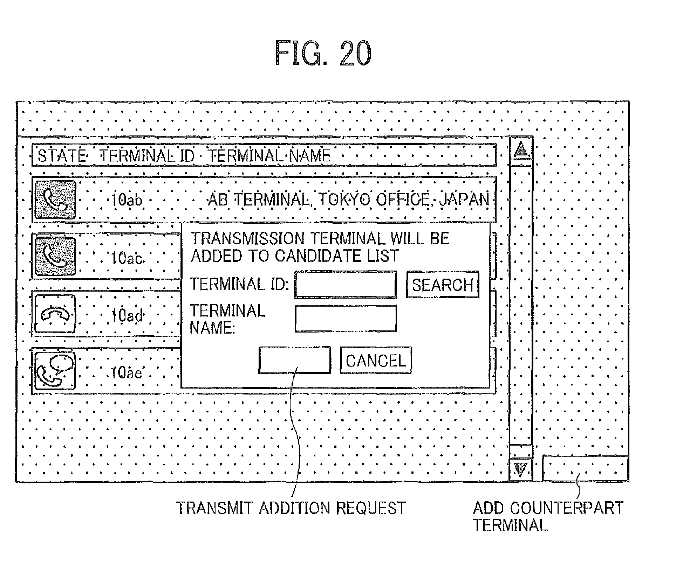

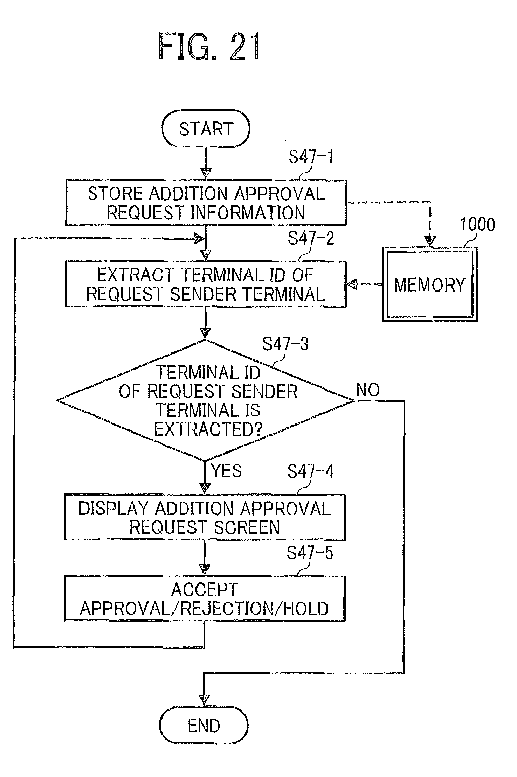

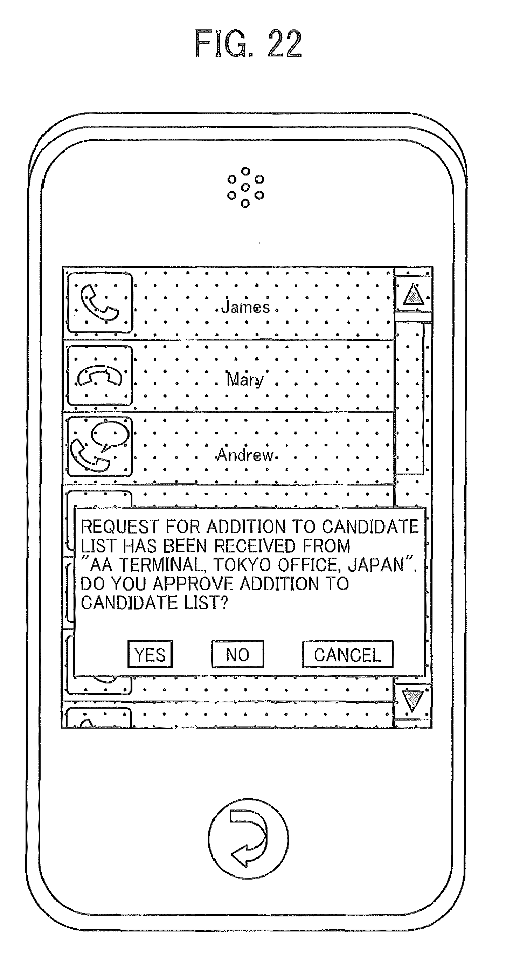

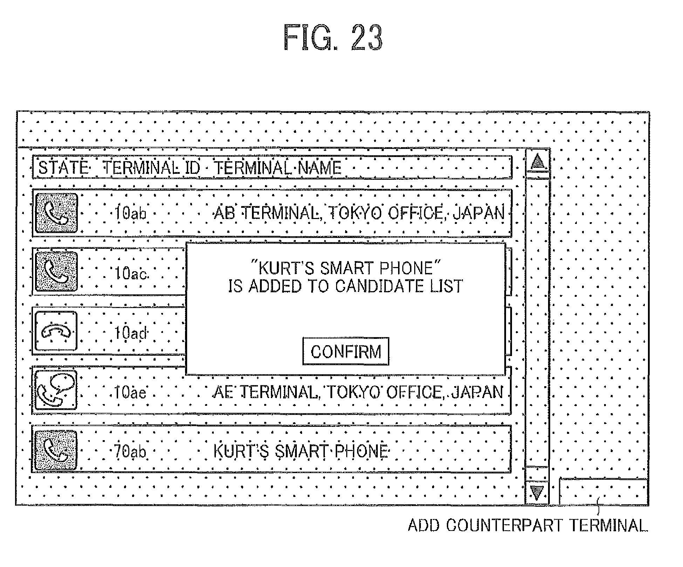

Next, using Figs. 18 to 23, operation of adding a counterpart terminal as a candidate counterpart terminal will be described. The embodiment discusses the case in which an addition request sender terminal (communication terminal 10aa) sends a request for adding an addition request destination terminal (communication terminal 70ab) in a candidate list of the addition request sender terminal (communication terminal 10aa). Note that Fig. 18 is a sequence diagram illustrating operation of adding a candidate counterpart terminal. Fig. 19 is a flowchart illustrating operation of determining whether to approve an addition approval request. Fig. 20 is an illustration of an addition request acceptance screen. Fig. 21 is a flowchart illustrating operation of processing an additional approval request. Fig. 22 is an illustration of an addition approval request screen. Fig. 23 is an illustration of an addition completion screen.

In response to user operation on the operation key 108d or the like by the user at the addition request sender terminal (communication terminal 10aa), which presses an "add counterpart terminal" key illustrated in the lower right-hand corner of the candidate list illustrated in Fig. 17, the operation input acceptor 12 accepts the pressing of the key, and the display control 24 displays addition request acceptance screen data stored in the memory 1000 on the display 120aa, thereby accepting a request for adding a candidate counterpart terminal (step S41). The addition request acceptance screen is displayed on a candidate list, such as that illustrated in Fig. 20.

Next, when the user inputs, with the operation key 108d or the like, the terminal ID or terminal name of a communication terminal that the user wants to add as a candidate counterpart terminal on the addition request acceptance screen illustrated in Fig. 20 (here, the terminal ID "07ab" is input) and presses a "transmit addition request" key, the operation input acceptor 12 accepts the input of the user, and the data transmitter/receiver 11 of the addition request sender terminal (communication terminal 10aa) transmits addition request information indicating a request for adding a candidate counterpart terminal, to the communication management system 50 via the communication network 2 (step S42). The addition request information includes the terminal ID "01aa" for identifying the addition request sender terminal (communication terminal 10aa), and the terminal ID "07ab" for identifying the addition request destination terminal (communication terminal 70ab). Accordingly, the data transmitter/receiver 51 of the communication management system 50 receives the addition request information.

Next, the communication management system 50 determines whether to transmit addition approval request information to the addition request destination terminal (communication terminal 70ab) (step S43). Here, step S43 will be described in more detail using Fig. 19.

As illustrated in Fig. 19, the data processor 59 searches the terminal management DB 5002 by using the terminal ID of the addition request destination terminal, received in step S42 described above, as a search key (step S43-1). The determiner 54 determines whether the terminal ID of the addition request destination terminal is managed in the terminal management DB 5002 (step S43-2). If it is determined in step S43-2 that the terminal ID of the addition request destination terminal is managed (YES), the data processor 59 further searches the application use terminal management DB 5005 by using the terminal ID of the addition request sender terminal and the terminal ID of the addition request destination terminal, received in step S42 described above, as search keys, thereby reading the application IDs of usable applications corresponding thereto (step S43-3). Further, the data processor 59 searches the application management DB 5006 by using the application IDs read in step S43-3 as search keys, thereby reading vendor IDs corresponding to the application IDs (step S43-4) for the addition request sender terminal 10aa and the addition request destination terminal 70ab.

Next, the determiner 54 determines whether the vendor IDs read in step S43-4 described above are the same for the addition request sender terminal 10aa and the addition request destination terminal 70ab, thereby determining whether addition can be requested (step S43-5). In the case where the determiner 54 determines in step S43-5 that the vendor IDs are the same, the determiner 54 determines that addition can be requested (step S43-6). In contrast, in the case where the determiner 54 determines that the vendor IDs are not the same, the determiner 54 determines that addition cannot be requested (step S43-7). Note that, in the case where the determiner 54 determines in step S43-2 described above that the terminal ID of the addition request destination terminal is not managed in the terminal management DB 5002, the determiner 54 determines in step S43-7 described above that addition cannot be requested.

Hereinafter, the case in which it is determined in step S43-6 that addition can be requested will be continuously described.

Referring back to Fig. 18, in the communication management system 50, the manager 53 stores the above-received terminal ID "01aa" of the addition request sender terminal in the terminal ID field of the request sender terminal of a new record in the addition request management DB 5004 (see Fig. 13), and additionally stores the terminal ID "07ab" of the addition request destination terminal in the terminal ID field of the addition request destination field of the above new record (step S44).

Next, the data processor 59 searches the terminal management DB 5002 (see Fig. 11) on the basis of the terminal ID "07ab" of the addition request destination terminal, and accordingly the determiner 54 checks a corresponding operating state (step S45). In the case where the determiner 54 determines that the operating state is online but the addition request destination terminal has not started communicating, the data transmitter/receiver 51 continuously transmits, to the addition request destination terminal (terminal 70ab), addition approval request information indicating a request for a response indicating whether to approve the above-mentioned addition request (step S46). The addition approval request information includes the terminal ID "01aa" of the addition request sender terminal. Accordingly, the data transmitter/receiver 11 of the addition request destination terminal (terminal 70ab) receives the addition approval request information.

Next, the addition request destination terminal (communication terminal 70ab) performs approving, rejecting, or holding the addition request (step S47). Here, step S47 will be described in more detail using Figs. 21 and 22.

First, upon reception of addition approval request information by the addition request destination terminal (communication terminal 70ab), the data processor 19 stores the addition approval request information in the memory 1000 (step S47-1). If items of addition approval request information are transmitted one after another, these items of addition approval request information are sequentially stored in the memory 1000.

Next, the data processor 19 extracts, from the memory 1000, the terminal ID of an addition request sender terminal included in the addition approval request information (step S47-2). In the case where a plurality of items of addition approval request information is stored, the terminal IDs of request sender terminals included in these items of addition approval request information are extracted one at a time.

In the case where the terminal ID of an addition request sender terminal is extracted in step S47-2 described above (YES in step S47-3), the display control 13 displays an addition approval request screen on the display 120, such as that illustrated in Fig. 22 (step S47-4). The addition approval request screen displays the terminal ID of the addition request sender terminal or the terminal name of the addition request sender terminal, an "yes" key pressed when the user of the addition request destination terminal (communication terminal 70ab) approves registration of the addition request destination terminal (communication terminal 70ab) in a candidate list of the addition request sender terminal (communication terminal 10aa), a "no" key pressed when the user rejects registration in the candidate list, and a "cancel" key pressed when the user holds approval or rejection. In the case where the terminal name of the addition request sender terminal is displayed, the addition approval request information transmitted in step S46 described above includes the terminal name of the addition request sender terminal, in addition to the terminal ID of the request sender terminal. In this case, with regard to the terminal name of the request sender terminal, when the operating state is checked in step S45 described above, a corresponding terminal name is also extracted.

Next, when the user of the addition request destination terminal presses one of the "yes", "no", and "cancel" keys on the addition approval request screen illustrated in Fig. 22, the operation input acceptor 12 accepts an instruction of "approve", "reject", or "hold", respectively (step S47-5). Further, the operation returns to step S47-2, and the operation is repeated by extracting the terminal IDs of the remaining addition request sender terminals stored in the memory 1000. In the case where the terminal IDs of all the addition request sender terminals are extracted (NO in step S47-3), the operation in step S47 ends.

Next, referring back to Fig. 18, the data transmitter/receiver 11 of the addition request destination terminal (communication terminal 70ab) transmits addition request response information indicating a response indicating whether the addition request has been approved, rejected, or held to the communication management system 50 (step S48). Accordingly, the data transmitter/receiver 51 of the communication management system 50 receives the addition request response information. Here, the case in which the addition request response indicates "approve" will be continuously described.

Next, the manager 53 additionally stores the terminal ID "07ab" of the addition request destination terminal associated with the terminal ID "01aa" of the addition request sender terminal in the addition request management DB 5004 (see Fig. 13) in association with the terminal ID "01aa" of the addition request sender terminal in the candidate list management DB 5003 (see Fig. 12), which is the same as the terminal ID "01aa" of the addition request sender terminal in the addition request management DB 5004 (see Fig. 13) (step S49).

Note that, in the case where the addition request response indicates "reject", in step S49 described above, the manager 53 deletes the record of the terminal ID "07ab" of the addition request destination terminal, which has been rejected, in the addition request management DB 5004 (see Fig. 13). Alternatively, in the case where the addition request response indicates "hold", in step S49 described above, the manager 53 does not perform additional management, and leaves the record in the candidate list management DB 5003 as it is without deleting it.

Next, the data processor 59 searches the terminal management DB 5002 (see Fig. 11) on the basis of the terminal ID "01aa" of the addition request sender terminal and the terminal ID "07ab" of the addition request destination terminal, thereby extracting items of corresponding information (terminal name and operating state) (step S50). The data transmitter/receiver 51 transmits addition completion information to each of the addition request sender terminal (communication terminal 10aa) and the addition request destination terminal (communication terminal 70ab) (steps S51-1 and S51-2). Of these items of addition completion information, one transmitted to the addition request sender terminal (communication terminal 10aa) includes a message indicating that the addition is completed, and items of information (terminal ID, terminal name, and operating state) of the addition request destination terminal (communication terminal 70ab). That is, only items of information (terminal ID, terminal name, and operating state) in the addition request destination terminal (communication terminal 70ab) portion in the candidate list are transmitted to the addition request sender terminal (communication terminal 10aa), and the entire candidate list is not transmitted again. In contrast, addition completion information transmitted to the addition request destination terminal (communication terminal 70ab) includes a message indicating that the addition is completed, and items of information (terminal ID, terminal name, and operating state) of the addition request sender terminal (communication terminal 10aa).

In the addition request sender terminal (communication terminal 10aa) and the addition request destination terminal (communication terminal 70ab), each display control 13 displays a screen indicating completion on a corresponding one of the displays (120 and 715) (steps S52-1 and S52-2). Fig. 23 illustrates an addition completion screen displayed on the display 120 of the addition request sender terminal (communication terminal 10aa). When the user of the addition request sender terminal (communication terminal 10aa) presses a "confirm" key, the candidate counterpart terminal addition request operation ends. Accordingly, by displaying the addition completion screen illustrated in Fig. 23, the user can promptly notice that the addition request has been approved, and hence there is an effect that communication can be immediately started with the added candidate counterpart terminal.

Note that, on the communication management system 50 side, when the operation in steps S51-1 and S51-2 ends, the manager 53 deletes a record of the terminal ID "07ab" of the approved addition request destination terminal in the addition request management DB 5004 (see Fig. 13), and accordingly, the entire candidate counterpart terminal adding operation ends (step S53).

As has been described above, according to at least one example of the embodiment, in the case where the provider (vendor, for example) of an application used by an addition request sender terminal (an example of a first communication terminal) and the provider (vendor, for example) of an application used by an addition request destination terminal (an example of a second communication terminal) are not the same, the communication management system 50 does not transmit an approval request to the addition request destination terminal. Accordingly, even in the case where fee charging systems, services, and so forth are different for each provider, the occurrence of confusion can be prevented as the addition request is not transmitted.

The communication management system 50 in the above-described embodiment may be implemented by a single computer or a plurality of computers to which divided units (functions) are arbitrarily allocated.

In addition, a recording medium storing the programs for the communication terminals (10 and 70) or the program for the communication management system 50 in the above-described embodiment, and the flash memory 104, the HD 504, or the EEPROM 704 storing these programs are each used in the case where they are provided as program products to users within a certain country or outside that country. Note that exemplary recording media include a compact disc recordable (CD-R), a digital versatile disk (DVD), a Blu-ray disk, and so forth.

In addition, communication terminals in the above-described embodiment are only exemplary, and they may be Internet Protocol (IP) phones, Internet phones, or the like in phone systems, or devices with other communication functions. Other devices include car navigation terminals, game machines, watches, and wearable computers.

Although image data serving as sight data and audio data serving as hearing data are described as examples of content data in the above-described embodiment, the content data is not limited to these items of data, and the content data may be other five-sense data. For example, in the case where the content data is touch data, a feeling obtained by a user's contact at one communication terminal is transmitted to the other communication terminal side. Further, in the case where the content data is smell data, a smell at one communication terminal side is transmitted to the other communication terminal side. In addition, in the case where the content data is taste data, a taste at one communication terminal side is transmitted to the other communication terminal side.

Further, the content data may be at least one of image (sight) data, audio (hearing) data, touch data, smell data, and taste data.

In addition, although the case in which a video conference or the like is held by the communication system 1 has been described in the above-described embodiment, the embodiment is not limited to this case. The communication system 1 may be used in meetings, general conversation between family members or friends, or one-way presentation of information.

In addition, each ID in the above-described embodiment indicates identification information such as a language, a character(s), a symbol(s), or various marks used to uniquely identify a corresponding object. In addition, each ID may be identification information including a combination of at least two of the above-mentioned language, character(s), symbol(s), and various marks. For example, a communication vendor ID is an example of communication application identification information, and the communication application identification information includes the name of the application, besides the communication vendor ID.

Further, although the vendor ID and the vendor name are separately managed in Fig. 15 in the above-described embodiment, the embodiment is not limited to this case. That is, instead of managing the vendor ID, the vendor name may be treated as an example of provider identification information for identifying the vendor.

In addition, icons illustrated in Fig. 9 may include not only characters, but also picture symbols, or picture symbols including characters or symbols.

Further, although the date/time received is managed in Fig. 11, the embodiment is not limited to this, and, out of the date/time received, it is only necessary to manage at least the time received.

Although the IP address of each terminal is managed in Fig. 11, the embodiment is not limited to this case, and the fully qualified domain name (FQDN) of each terminal may be managed instead. In this case, an IP address corresponding to an FQDN is obtained by a Domain Name System (DNS) server of the related art.

Although terminal IDs are used in the above-described embodiment, user IDs for identifying users may be used instead.

Numerous additional modifications and variations are possible in light of the above teachings. It is therefore to be understood that within the scope of the appended claims, the disclosure of the present invention may be practiced otherwise than as specifically described herein. For example, elements and/or features of different illustrative embodiments may be combined with each other and/or substituted for each other within the scope of this disclosure and appended claims.

Further, any of the above-described devices or units can be implemented as a hardware apparatus, such as a special-purpose circuit or device, or as a hardware/software combination, such as a processor executing a software program.

The present invention can be implemented in any convenient form, for example using dedicated hardware, or a mixture of dedicated hardware and software. The present invention may be implemented as computer software implemented by one or more networked processing apparatuses. The network can comprise any conventional terrestrial or wireless communications network, such as the Internet. The processing apparatuses can compromise any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implementable on a programmable device. The computer software can be provided to the programmable device using any conventional carrier medium. The carrier medium can compromise a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as a floppy disk, hard disk, CD ROM, magnetic tape device or solid state memory device.

The hardware platform includes any desired kind of hardware resources including, for example, a central processing unit (CPU), a random access memory (RAM), and a hard disk drive (HDD). The CPU may be implemented by any desired kind of any desired number of processor. The RAM may be implemented by any desired kind of volatile or non-volatile memory. The HDD may be implemented by any desired kind of non-volatile memory capable of storing a large amount of data. The hardware resources may additionally include an input device, an output device, or a network device, depending on the type of the apparatus. Alternatively, the HDD may be provided outside of the apparatus as long as the HDD is accessible. In this example, the CPU, such as a cashe memory of the CPU, and the RAM may function as a physical memory or a primary memory of the apparatus, while the HDD may function as a secondary memory of the apparatus.

## Claims

1. A communication management system (50), comprising:
an application manager (5006) that stores provider identification information for identifying a provider in association with application identification information for identifying each one of applications that are provided by the provider;
a receiver (51) that receives, from a first communication terminal (10aa), an addition request for adding a second communication terminal (70ab) as a candidate counterpart terminal of the first communication terminal (10aa);
a determiner (54) that determines whether first application identification information for identifying an application used by the first communication terminal (10aa) and second application identification information for identifying an application used by the second communication terminal (70ab) are associated with the same provider identification information to generate a determination result; and
a transmitter (51) that transmits an addition approval request to the second communication terminal (70ab), the addition approval request requesting to approve addition of the second communication terminal (70ab) as a candidate counterpart terminal of the first communication terminal (10aa),
wherein the transmitter (51) controls not to transmit the addition approval request when the determination result indicates that the first application identification information and the second application identification information are not associated with the same provider identification information.

2. The communication management system (50) of claim 1, further comprising:
an application use terminal manager (5005) that stores, for each one of a plurality of applications, application identification information for identifying the application in association with terminal identification information for identifying one or more communication terminals capable of using the application,
wherein the receiver (51) receives first terminal identification information for identifying the first communication terminal (10aa) and second terminal identification information for identifying the second communication terminal (70ab), respectively, from the first communication terminal (10aa), and
the data processor (59) obtains, from the application use terminal manager (5005), the first application identification information associated with the first terminal identification information, and the second application identification information associated with the second terminal identification information.

3. The communication management system (50) of claim 2, wherein
the transmitter (51) transmits the addition approval request to the second communication terminal (70ab), when the determination result indicates that the first application identification information and the second application identification information are associated with the same vender identification information, and
the data processor (59) stores the second terminal identification information in association with the first terminal identification information, when a response to the addition approval request from the second communication terminal (70ab) indicates that addition is approved.

4. A communication system (1), comprising:
the communication management system (50) of any one of claims 1 to 3; and
at least one of the first communication terminal (10aa) and the second communication terminal (70ab).

5. The communication system (1) of claim 4, wherein the at least one communication terminal includes a portable phone.

6. The communication system (1) of claim 4, wherein the at least one communication terminal includes a navigation system mountable on an automobile.

7. A method of controlling transmission of an addition approval request, comprising:
receiving, from a first communication terminal (10aa), an addition request for adding a second communication terminal (70ab) as a candidate counterpart terminal of the first communication terminal (10aa);
obtaining (S43-4), from a memory, information that associates application identification information for identifying a provider with application identification information for identifying each one of applications that are provided by the provider;
determining (S43-5) whether first application identification information for identifying an application used by the first communication terminal (10aa) and second application identification information for identifying an application used by the second communication terminal (70ab) are associated with the same provider identification information to generate a determination result; and
controlling not to transmit an addition approval request to approve addition of the second communication terminal (70ab) as a candidate counterpart terminal of the first communication terminal (10aa), when the determination result indicates that the first application identification information and the second application identification information are not associated with the same provider identification information.

8. The method of claim 7, further comprising:
storing, in the memory, for each one of a plurality of applications, application identification information for identifying the application in association with terminal identification information for identifying one or more communication terminals capable of using the application;
receiving first terminal identification information for identifying the first communication terminal (10aa) and second terminal identification information for identifying the second communication terminal (70ab), respectively, from the first communication terminal (10aa); and
obtaining (S43-3), from the memory, the first application identification information associated with the first terminal identification information, and the second application identification information associated with the second terminal identification information.

9. The method of claim 8, further comprising:
transmitting the addition approval request to the second communication terminal (70ab), when the determination result indicates that the first application identification information and the second application identification information are associated with the same vender identification information; and
storing the second terminal identification information in association with the first terminal identification information, when a response to the addition approval request from the second communication terminal (70ab) indicates that addition is approved.

10. A carrier means carrying computer readable code for controlling a computer to carryout the method of any one of claims 7 to 9.
